# EUROPÄISCHE PATENTSCHRIFT

(11) **EP 3 103 742 B1**
(45) Veröffentlichungstag und Bekanntmachung des Hinweises auf die Patenterteilung: **17.07.2019**
(21) Anmeldenummer: 16171614.7
(22) Anmeldetag: 27.05.2016
(51) Int. Cl.: B65G 47/14

(54) **VORRICHTUNG ZUR VEREINZELUNG VON PRÜFLINGEN**
DEVICE FOR SEPARATING TEST OBJECTS
DISPOSITIF DE SEPARATION D'ECHANTILLONS

(30) Priorität: 12.06.2015 DE 102015109387
(43) Veröffentlichungstag der Anmeldung: 14.12.2016
(73) Patentinhaber: Kraemer, Thilo, 64291 Darmstadt (DE)
(72) Erfinder: Kraemer, Thilo, 64291 Darmstadt (DE); Jezierski, Thomas, 63500 Seligenstadt (DE)
(74) Vertreter: Hamel, Armin

(56) Entgegenhaltungen:
- EP-A2- 0 997 406
- DE-A1- 19 511 948
- FR-A- 1 162 716
- FR-A1- 2 310 164
- US-A- 4 673 077

## Beschreibung

Die Erfindung betrifft eine Vorrichtung zur Vereinzelung von Prüflingen umfassend zumindest eine erste innere Drehscheibe und eine zweite äußere Drehscheibe, wobei die erste innere Drehscheibe von der zweiten äußeren Drehscheibe umgeben ist, wobei zumindest ein Antrieb vorgesehen ist, mit dem die erste innere Drehscheibe und die zweite äußere Drehscheibe in eine Bewegung versetzbar sind, wobei die Bewegungsgeschwindigkeiten der beiden Drehscheiben unterschiedlich hoch sind.

Aus DE 3711827 A1 sind ein Verfahren sowie eine Vorrichtung zum Vereinzeln von kleinvolumigen Prüflingen, wie Tabletten, Pillen, Zäpfchen oder Körnern, bekannt. Die Prüflinge werden in eine Rinne gefüllt, die gemäß einer schiefen Ebene abwärts geneigt ist. Anschließend wird die Rinne mit den darin befindlichen Prüflingen hin- und herbewegt, so dass die untere Fallkante der Rinne ebenfalls hin- und herbewegt wird, wodurch die Prüflinge einzeln aus der Rinne fallen.

Die Prüflinge können allerdings auf dieser Vorrichtung zum Vereinzeln nur recht langsam einem sich an diese Vereinzelungsvorrichtung anschließendes Prüfsystem zugeführt werden. Auch dauert das Entleeren dieser Vorrichtung zur Vereinzelung recht lange. EP 0 997 406 A2 offenbart eine Vorrichtung zur Vereinzelung von Prüflingen gemäß dem Oberbegriff des Anspruchs 1.

Aufgabe der vorliegenden Erfindung ist es, eine Vorrichtung zur Vereinzelung von Prüflingen bereitzustellen, mit der Prüflinge sehr schnell vereinzelt und auch sehr schnell einem Prüfsystem zugeführt werden können, wobei immer nur ein Prüfling in ein Prüfsystem zugeführt wird.

[A01] Diese Aufgabe wird durch eine Vorrichtung zur Vereinzelung von Prüflingen gemäß Anspruch 1 gelöst. Die erste innere Drehscheibe ist in eine erste Drehrichtung um eine Rotationsachse drehbar angeordnet und eine zweite äußere Drehscheibe ist ebenfalls um die Rotationsachse in eine der ersten Drehrichtung entgegengesetzte zweite Drehrichtung drehbar angeordnet. Um die Drehscheiben in eine Drehbewegung zu versetzen, ist zumindest ein Antrieb vorgesehen. Die Bewegungsrichtungen der beiden Drehscheiben können jedoch auch gleich sein. Die Bewegungsgeschwindigkeiten der beiden Drehscheiben sind dabei allerdings unterschiedlich. Vorzugsweise weist die erste Drehscheibe eine höhere Geschwindigkeit als die zweite Drehscheibe auf. Zwischen der ersten Drehscheibe und der zweiten Drehscheibe kann eine erste Barriere angeordnet sein, die zumindest eine Öffnung aufweist, durch die ein Prüfling von der ersten Drehscheibe auf die zweite Drehscheibe gelangen kann. Die zweite Drehscheibe ist dabei zwischen der ersten Barriere und einer zweiten Barriere angeordnet. Vorzugsweise weist die erste Drehscheibe eine Oberfläche auf, die in Richtung der ersten Barriere abwärts geneigt ist und die zweite Drehscheibe eine Oberfläche, die in Richtung der zweiten Barriere abwärts geneigt ist, womit ein konischer Aufbau der beiden Drehscheiben bevorzugt ist. An den beiden Auswürfen sind Sensoren vorgesehen, die erkennen, wenn ein Prüfling über den entsprechenden Auswurf die Vorrichtung verlässt. Durch Drehung der zweiten äußeren Drehscheibe um die Rotationsachse ist ein innerer Abschnitt der Vorrichtung entleerbar, wodurch die Prüflinge über den Auswurf aus der Vorrichtung entfernt werden.

Vorteilhaft ist dabei, dass die Prüflinge aufgrund des konischen Aufbaus bereits bei Aufbringung auf die erste Drehscheibe an der ersten Barriere anliegen und bei Drehung der Drehscheibe zu der zumindest einen Öffnungen bewegt werden, aus denen sie dann aufgrund der Zentrifugalkraft von der ersten Drehscheibe auf die zweite Drehscheibe bewegt werden. Durch Einstellen von unterschiedlichen Drehgeschwindigkeiten und durch unterschiedliche Drehrichtungen der Drehscheiben werden die Prüflinge voneinander separiert.

Mit der Vorrichtung zur Vereinzelung von Prüflingen ist es somit möglich, Prüflinge sehr schnell zu vereinzeln und auch sehr schnell einem Prüfsystem zuzuführen.

[A02] Zwischen der ersten Drehscheibe und der zweiten Drehscheibe ist eine erste Barriere angeordnet, die zumindest eine Öffnung aufweist, durch die ein Prüfling von der ersten Drehscheibe auf die zweite Drehscheibe gelangen kann. Die zweite Drehscheibe ist dabei zwischen der ersten Barriere und einer zweiten Barriere angeordnet. Vorzugsweise weist die erste Drehscheibe eine Oberfläche auf, die in Richtung der ersten Barriere abwärts geneigt ist und die zweite Drehscheibe eine Oberfläche, die in Richtung der zweiten Barriere abwärts geneigt ist, womit die beiden Drehscheiben einen konischer Aufbau aufweisen. Durch die erste Barriere wird verhindert, dass eine zu große Menge an Prüflingen von der ersten Drehscheibe auf die zweite Drehscheibe gelangt, weil die Prüflinge nur über die Öffnung auf die zweite Drehscheibe gelangen können.

[A03] Die zweite Drehscheibe zwischen der ersten Barriere und einer zweiten Barriere angeordnet, wobei die zweite Barriere zwei Auswürfe aufweist. Durch diese Auswürfe werden die einzelnen Prüflinge aus der Vorrichtung zur Vereinzelung entfernt. Dabei kann über einen der Auswürfe der vereinzelte Prüfling zu einer sich an die Vorrichtung zur Vereinzelung anschließendes Prüfsystem, zum Beispiel eine Härtemessvorrichtung, gelangen, während der andere Auswurf dazu dient, Prüflinge vollständig aus der Vorrichtung zur Vereinzelung zu entfernen.

[A04] In einer bevorzugten Ausführungsform weist die äußere Drehscheibe an einem Übergang von der inneren Drehscheibe zu der äußeren Drehscheibe eine Nut auf, in der Staub und Schmutz auffangbar sind. Dadurch wird verhindert, dass Staub oder Schmutz in das sich an die Vorrichtung anschließende Prüfsystem gelangt. Vorteilhaft ist, dass die Nut sehr einfach gereinigt werden kann. In einer besonders vorteilhaften Ausführungsform ist die Vorrichtung zur Vereinzelung werkzeuglos zerlegbar, so dass diese Vorrichtung einfach auseinander zu nehmen und somit zu reinigen ist.

[A05] Vorzugsweise sind an den Auswürfen Schikanen vorgesehen, die dafür sorgen, dass die Prüflinge die Vorrichtung über die entsprechenden Auswürfe verlassen. Diese Schikanen sind zwischen der ersten Barriere und der zweiten Barriere angeordnet.

[A06] Des Weiteren ist von Vorteil, wenn ein innerer Abschnitt vorgesehen ist, der als Reservoir für Prüflinge dient, wobei dieser Abschnitt von der ersten Drehscheibe umgeben ist und wobei die Prüflinge über eine Öffnung auf die erste Drehscheibe gelangen können. Diese Öffnung ist in einer Abgrenzung angebracht, die zwischen der ersten Drehscheibe und dem Inneren Abschnitt angeordnet ist. Vorteilhaft ist dabei insbesondere, dass über die Öffnung kontinuierlich Prüflinge auf die erste Drehscheibe befördert werden. Da die Öffnung recht klein ist, findet hier schon die erste Vereinzelung von Prüflingen statt, weil nur eine geringe Anzahl von Prüflingen auf die sich drehende Drehscheibe befördert werden können.

Ein Ausführungsbeispiel wird in den Figuren gezeigt und im Folgenden näher beschriebenen. Es zeigen:
- Figur 1: eine perspektivische Ansicht einer Vorrichtung zur Vereinzelung von Prüflingen und
- Figur 2: einen Schnitt A-A durch die Figur 1 gezeigte Vorrichtung.

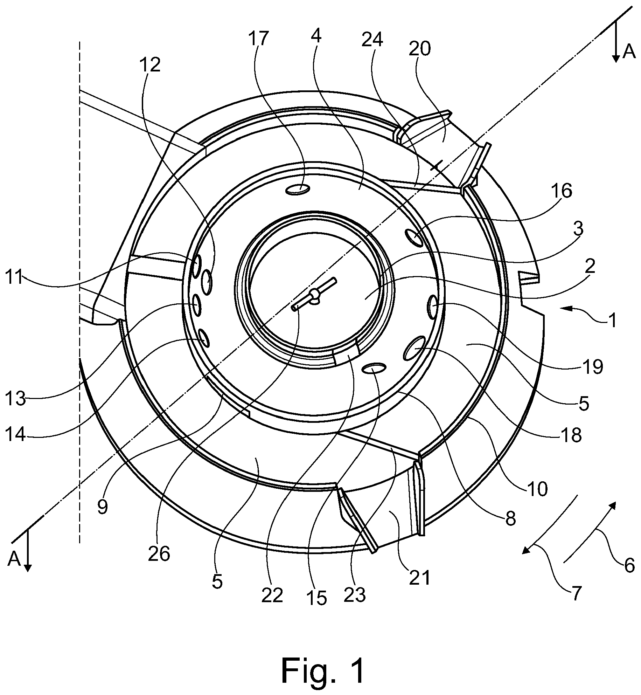

In Figur 1 ist eine perspektivische Ansicht einer Vorrichtung 1 zur Vereinzelung von Prüflingen dargestellt. Die Vorrichtung 1 umfasst einen inneren Abschnitt 2, der von einer Abgrenzung 3 umgeben ist. Die Abgrenzung 3 ist vorzugsweise als Wand ausgebildet. In diesem inneren Abschnitt 2 befindet sich ein Reservoir an Prüflingen (der Übersicht halber nicht dargestellt), die einem Prüfsystem (nicht dargestellt) zugeführt werden sollen. In diesem Prüfsystem werden die Prüflinge vermessen. Die Prüflinge gelangen über eine Öffnung 22 in der Abgrenzung 3 nach und nach auf eine innere erste Drehscheibe 4. Zu erkennen ist auch eine im Wesentlichen T-förmige Halterung 26, die dazu dient, dass eine Person den inneren Abschnitt 2 mit der darin angeordneten Drehscheibe 4 per Hand aus der Vorrichtung 1 entfernen kann, zum Beispiel wenn die Vorrichtung 1 auseinander gebaut werden soll.

An diese Abgrenzung 3 schließt sich die erste innere Drehscheibe 4 sowie eine zweite äußere Drehscheibe 5 an, wobei die äußere Drehscheibe 5 die innere Drehscheibe 4 umgibt. Auf der inneren Drehscheibe 4 sind beispielhaft vier Prüflinge 11 bis 19 aufgebracht. Bei den Prüflingen 11 bis 19 handelt es sich um Tabletten, wobei in der Figur 1 die Tabletten die Form von Oblongs haben. Die erste innere Drehscheibe 4 ist um eine Rotationsachse R in eine erste Drehrichtung drehbar angeordnet und eine zweite äußere Drehscheibe 5 ist ebenfalls um die Rotationsachse R in eine der ersten Drehrichtung entgegengesetzte zweite Drehrichtung drehbar angeordnet. Die erste Drehrichtung ist dabei durch den Pfeil 6 und die zweite Drehrichtung durch den Pfeil 7 angedeutet. Es versteht sich, dass sich die beiden Drehscheiben 4, 5 auch in die gleiche Richtung drehen können, womit die erste Drehrichtung der zweiten Drehrichtung entsprechen würde. Die Geschwindigkeiten, mit denen sich die beiden Drehscheiben 4 und 5 drehen, sind dabei unterschiedlich hoch. Vorzugsweise weist die erste Drehscheibe 4 eine höhere Drehgeschwindigkeit als die zweite Drehscheibe 5 auf. Es ist aber auch möglich, dass die Drehgeschwindigkeit der ersten inneren Drehscheibe 4 höher ist als die Drehgeschwindigkeit der zweiten äußeren Drehscheibe 5. Zwischen der ersten Drehscheibe 4 und der zweiten Drehscheibe 5 ist eine erste Barriere 8 angeordnet, die eine Öffnung 9 aufweist, durch die zumindest ein Prüfling von der ersten Drehscheibe 4 auf die zweite Drehscheibe 5 gelangen kann. Dabei ist es auch möglich, auf die Barriere 8 zu verzichten. Die zweite Drehscheibe 5 ist zwischen der ersten Barriere 8 und einer zweiten Barriere 10 angeordnet. Bei den beiden Barrieren 8, 10 kann sich beispielsweise um eine Bande oder um eine Wand handeln.

Vorzugsweise weist die erste Drehscheibe 4 eine Oberfläche auf, die in Richtung der ersten Barriere 8 abwärts geneigt ist und die zweite Drehscheibe 5 eine Oberfläche auf, die in Richtung der zweiten Barriere 10 abwärts geneigt ist, womit die beiden Drehscheiben 4, 5 konisch aufgebaut sind. Vorteilhaft bei dem konischen Aufbau ist, dass die Prüflinge 11 bis 19 bereits bei Aufbringung auf die erste Drehscheibe 4 an der ersten Barriere 8 anliegen und bei Drehung der Drehscheibe 4 zu der zumindest einen Öffnungen 9 bewegt werden, aus der sie dann aufgrund der Zentrifugalkraft auf die zweite Drehscheibe 5 befördert werden.

Durch Einstellen von unterschiedlichen Drehgeschwindigkeiten der Drehscheiben 4, 5 werden die Prüflinge voneinander separiert. Weist zum Beispiel die zweite Drehscheibe 5 eine höhere Geschwindigkeit als die erste Drehscheibe 4 auf, so werden die auf die erste Drehscheibe 5 befindlichen Prüflinge schneller von der Öffnung 9 fortbewegt, als neue Prüflinge von der ersten Drehscheibe 4 auf die zweite Drehscheibe 5 gelangen können.

Die zweite Barriere 10 besitzt zwei Auswürfe 20, 21 über die die einzelnen Prüflinge aus der Vorrichtung 1 zur Vereinzelung entfernt werden können. Dabei kann über einen der Auswürfe 21 der vereinzelte Prüfling (nicht gezeigt) zu einer sich an die Vorrichtung 1 zur Vereinzelung anschließendes Prüfsystem (nicht dargestellt), zum Beispiel eine Härtemessvorrichtung, gelangen, während der andere Auswurf 20 lediglich dazu dient, Prüflinge aus der Vorrichtung 1 zur Vereinzelung zu entfernen.

Dadurch ist es möglich, dass immer nur ein Prüfling zum Prüfsystem gelangt. Damit der zu vermessene Prüfling dem Prüfsystem zugeführt wird, ist eine erste Schikane 23 vorgesehen, die zwischen den beiden Barrieren 8 und 10 angeordnet ist. Diese Schikane 23 sorgt dafür, dass der Prüfling die Vorrichtung 1 über den Auswurf 21 verlässt und nicht weiter auf der Drehscheibe 5 verbleibt, da der Prüfling, falls er mit der Schikane 23 in Kontakt gerät, entlang dieser Schikane 23 zum Auswurf 21 bewegt wird.

Soll der innere Abschnitt 2 entleert werden, so wird die äußere Drehscheibe 5 in die entgegengesetzte Richtung, das heißt in Richtung des Pfeils 7 bewegt. Die Prüflinge können so über den Auswurf 20 aus der Vorrichtung 1 entfernt werden. Damit Prüflinge jedoch nicht weiter auf der Drehscheibe 5 verbleiben, ist eine zweite Schikane 24 vorgesehen. An den beiden Auswürfen 20, 21 sind in Figur 1 nicht dargestellte Sensoren vorgesehen. Diese Sensoren erkennen, wenn ein Prüfling über den entsprechenden Auswurf 20, 21 die Vorrichtung 1 verlässt. Dabei ist es auch möglich, dass die Drehscheibe 5 für einen kurzen Augenblick angehalten wird, bis ein Prüfling, der dem Prüfsystem zugeführt werden soll, die Vorrichtung 1 verlassen hat. Damit wird verhindert, dass ein nachfolgender Prüfling ebenfalls über den Auswurf 21 die Vorrichtung 1 verlässt und so zwei Prüflinge gleichzeitig dem Prüfsystem zugeführt werden.

An einem Übergang von der inneren Drehscheibe 4 zu der äußeren Drehscheibe 5 weist die äußere Drehscheibe 5 eine Nut (in dieser Ansicht nicht zu erkennen) auf, in der Staub und Schmutz auffangbar sind. Dadurch wird verhindert, dass Staub oder Schmutz in das sich an die Vorrichtung 1 anschließende Prüfsystem gelangt. Diese Nut kann sehr einfach gereinigt werden. In einer besonders vorteilhaften Ausführungsform ist die Vorrichtung 1 zur Vereinzelung werkzeuglos zerlegbar.

Es versteht sich, dass die Vorrichtung 1 zur Vereinzelung von Prüflingen auch mehr als nur die beiden Drehscheiben 4, 5 aufweisen kann. So ist es beispielsweise möglich, dass zwischen der ersten Drehscheibe 4 und der zweiten Drehscheibe 5 noch zwei weitere Drehscheiben angeordnet sind, die von Barrieren voneinander getrennt sind. Auch in diesem Fall weisen die Drehscheiben unterschiedliche Drehgeschwindigkeiten auf, wobei es insbesondere wichtig ist, dass die jeweils benachbarten Drehscheiben unterschiedliche Drehgeschwindigkeiten aufweisen.

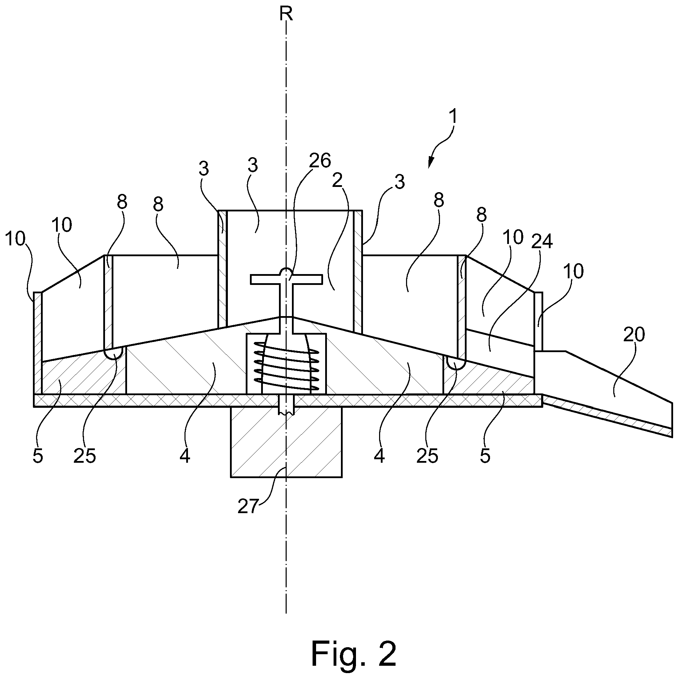

In Figur 2 ist ein Schnitt A-A durch die in Figur 1 gezeigte Vorrichtung 1 zur Vereinzelung von Prüflingen gezeigt. Die Prüflinge sind in der Figur 2 der Übersicht halber nicht gezeigt.

In dem Inneren Abschnitt 2 mit der im Wesentlichen T-förmigen Halterung 26 befindet sich ein Reservoir an Prüflingen, wobei die Prüflinge in dem Abschnitt 2 nicht gezeigt sind. Der Abschnitt 2 ist von der Abgrenzung 3 von der Drehscheibe 4 getrennt. An einem Übergang von der inneren Drehscheibe 4 zu der äußeren Drehscheibe 5 weist die äußere Drehscheibe 5 eine Nut 25 auf, in der Staub und Schmutz auffangbar sind. Dadurch wird verhindert, dass Staub oder Schmutz in das sich an die Vorrichtung 1 anschließende Prüfsystem (nicht gezeigt) gelangt. Die zweite äußere Drehscheibe 5 ist durch der Barriere 8 von der ersten Drehscheibe 4 abgegrenzt und besitzt eine zweite Barriere 10, die eine Außenbarriere darstellt und verhindert, dass Prüflinge aus der Vorrichtung 1 herausgeschleudert werden, wenn sich die Drehscheibe 5 um die Rotationsachse R dreht. Gut zu erkennen ist in der Figur 2 der konische Aufbau der beiden Drehscheiben 4, 5. Die Barriere 10 weist eine Öffnung auf, an der sich der Auswurf 20 sowie die Schikane 24 befinden. Die beiden Drehscheiben 4, 5 werden von zumindest einem Antrieb um die Rotationsachse R in Drehbewegung versetzt, wobei der zumindest eine Antrieb ein Motor mit Übersetzung sein kann, so dass sowohl die Drehscheibe 4 als auch die Drehscheibe 5 von diesem Motor bewegt werden. Es kann jedoch auch jeder Drehscheibe 4 bzw. 5 ein eigener Motor zugeordnet sein, der die entsprechende Drehscheibe 4, 5 in Bewegung um die Rotationsachse R versetzt. Möglich ist auch, dass es sich bei dem Motor, der die Drehscheibe 4 antreibt, ein Schrittmotor ist, mit dem eine gepulste Bewegung durchgeführt werden kann. In diesem Fall dreht sich die Drehscheibe 5 nicht komplett um die Rotationsachse R, sondern bewegt sich immer nur ein Stück hin und wieder zurück. Ein solcher Schrittmotor kann beispielsweise dann vorgesehen sein, wenn sich zwischen den beiden Drehscheiben 4, 5 keine Barriere befindet. In der Figur 2 ist ein Antrieb 27 nur schematisch dargestellt, wobei es sich um einen Motor mit Übersetzung oder um zwei Motoren handeln kann, die die Drehscheiben 4, 5 antreiben.

### Bezugszeichenliste

- 1: Vorrichtung
- 2: Innerer Abschnitt
- 3: Abgrenzung
- 4: Erste Drehscheibe
- 5: Äußere Drehscheibe
- 6: Pfeil
- 7: Pfeil
- 8: Erste Barriere
- 9: Öffnung
- 10: Zweite Barriere
- 11: Prüfling
- 12: Prüfling
- 13: Prüfling
- 14: Prüfling
- 15: Prüfling
- 16: Prüfling
- 17: Prüfling
- 18: Prüfling
- 19: Prüfling
- 20: Auswurf
- 21: Auswurf
- 22: Öffnung
- 23: Erste Schikane
- 24: Zweite Schikane
- 25: Nut
- 26: T-förmige Halterung
- 27: Antrieb
- R: Rotationsachse

## Patentansprüche

1. Vorrichtung (1) zur Vereinzelung von Prüflingen umfassend zumindest eine erste innere Drehscheibe (4) und eine zweite äußere Drehscheibe (5), wobei die erste innere Drehscheibe (4) von der zweiten äußeren Drehscheibe (5) umgeben ist, wobei zumindest ein Antrieb (27) vorgesehen ist, mit dem die erste innere Drehscheibe (4) und die zweite äußere Drehscheibe (5) um eine Rotationsachse (R) in Bewegung versetzbar sind, wobei die Bewegungsgeschwindigkeiten der beiden Drehscheiben (4, 5) unterschiedlich hoch sind, wobei zwischen der ersten Drehscheibe (4) und der zweiten Drehscheibe (5) eine erste Barriere (8) angeordnet ist, wobei die zweite Drehscheibe (5) zwischen der ersten Barriere (8) und einer zweiten Barriere (10) angeordnet ist, **dadurch gekennzeichnet, dass** die zweite Barriere (10) zwei Auswürfe (20, 21) aufweist, über die die Prüflinge von der Vorrichtung (1) entfernbar sind und wobei an den Auswürfen (20, 21) Schikanen (23, 24) vorgesehen sind, die zwischen der ersten Barriere (8) und der zweiten Barriere (10) derart angeordnet sind, dass die Prüflinge die Vorrichtung (1) über die entsprechenden Auswürfe (20, 21) verlassen, wobei an den beiden Auswürfen (20, 21) Sensoren vorgesehen sind, die erkennen, wenn ein Prüfling über den entsprechenden Auswurf (20, 21) die Vorrichtung (1) verlässt und wobei durch Drehung der zweiten äußeren Drehscheibe (5) in eine zu einer ersten Drehrichtung (6) der zweiten äußeren Drehscheibe (5) entgegengesetzte Richtung (7) ein innerer Abschnitt (2) der Vorrichtung (1) entleerbar ist und die Prüflinge dadurch über den Auswurf (20) aus der Vorrichtung (1) entfernbar sind.

2. Vorrichtung (1) zur Vereinzelung von Prüflingen nach Patentanspruch 1, **dadurch gekennzeichnet, dass** die äußere Drehscheibe (5) eine Nut (25) aufweist, in der Staub und Schmutz auffangbar sind.

3. Vorrichtung (1) zur Vereinzelung von Prüflingen nach Patentanspruch 1, **dadurch gekennzeichnet, dass** ein innerer Abschnitt (2) vorgesehen ist, der als Reservoir für Prüflinge dient, wobei der Abschnitt (2) von der ersten Drehscheibe (4) umgeben ist und wobei die Prüflinge über eine Öffnung (22) auf die erste Drehscheibe (4) gelangen können, wobei die Öffnung (22) in einer Abgrenzung (3) vorgesehen ist, die zwischen der ersten Drehscheibe (4) und dem inneren Abschnitt (2) angeordnet ist.

## Claims

1. Device (1) for separating test samples comprising at least one first inner rotary disk (4) and a second outer rotary disk (5), wherein the first inner rotary disk (4) is encompassed by the second outer rotary disk (5), wherein at least one drive (27) is provided with which the first inner rotary disk (4) and the second outer rotary disk (5) can be set into motion about an axis of rotation (R), wherein the motion speeds of the two rotary disks (4, 5) differ, wherein between the first rotary disk (4) and the second rotary disk (5) a first barrier (8) is disposed, wherein the second rotary disk (5) is disposed between the first barrier (8) and a second barrier (10), **characterized in that** the second barrier (10) comprises two ejectors (20, 21) via which the test samples can be removed from the device (1) and wherein at the ejectors (20, 21) baffles (23, 24) are provided disposed between the first barrier (8) and the second barrier (10) such that the test samples leave the device (1) across the respective ejectors (20, 21), wherein at both ejectors (20, 21) sensors are provided that detect when a test sample leaves the device (1) across the respective ejector (20, 21) and wherein by rotation of the second outer rotary disk (5) in a direction (7) opposite to a first direction of rotation (6) of the second outer rotary disk (5) an inner sector (2) of the device (1) can be emptied and the test samples thereby can be removed from the device (1) across the ejector (20).

2. Device (1) for separating test samples as in patent claim 1, **characterized in that** the outer rotary disk (5) comprises a groove (25) in which dirt and dust can be captured.

3. Device (1) for separating test samples as in patent claim 1, **characterized in that** an inner sector (2) is provided that serves as a reservoir for test samples, wherein the sector (2) is encompassed by the first rotary disk (4) and wherein the test samples can be transported across an opening (22) onto the first rotary disk (4), wherein the opening (22) is provided in a demarcation (3) disposed between the first rotary disk (4) and the inner sector (2).

## Revendications

1. Dispositif (1) pour séparer des échantillons, comprenant au moins un premier plateau rotatif intérieur (4) et un deuxième plateau rotatif extérieur (5), le premier plateau rotatif intérieur (4) étant entouré par le deuxième plateau rotatif extérieur (5), au moins un entraînement (27) étant prévu, avec lequel le premier plateau rotatif intérieur (4) et le deuxième plateau rotatif extérieur (5) peuvent être mis en mouvement autour d'un axe de rotation (R), les vitesses de rotation des deux plateaux rotatifs (4, 5) étant différentes, une première barrière (8) étant disposée entre le premier plateau rotatif (4) et le deuxième plateau rotatif (5), le deuxième plateau rotatif (5) étant disposé entre la première barrière (8) et une deuxième barrière (10), **caractérisé en ce que** la deuxième barrière (10) présente deux systèmes d'éjection (20, 21) par le biais desquels les échantillons peuvent être enlevés du dispositif (1) et des chicanes (23, 24) étant prévues au niveau des systèmes d'éjection (20, 21), lesquelles sont disposées entre la première barrière (8) et la deuxième barrière (10) de telle sorte que les échantillons quittent le dispositif (1) par le biais des systèmes d'éjections correspondants (20, 21), des capteurs étant prévus au niveau des deux systèmes d'éjection (20, 21), lesquels détectent quand un échantillon quitte le dispositif (1) par le biais du système d'éjection correspondant (20, 21), et, par rotation du deuxième plateau rotatif extérieur (5) dans une direction (7) opposée à une première direction de rotation (6) du deuxième plateau rotatif extérieur (5), une portion intérieure (2) du dispositif (1) pouvant être vidée et les échantillons pouvant de ce fait être enlevés du dispositif (1) par le biais du système d'éjection (20).

2. Dispositif (1) pour séparer des échantillons selon la revendication 1, **caractérisé en ce que** le plateau rotatif extérieur (5) présente une rainure (25) dans laquelle de la poussière et de la saleté peuvent être recueillies.

3. Dispositif (1) pour séparer des échantillons selon la revendication 1, **caractérisé en ce qu'**une portion intérieure (2) est prévue, laquelle sert de réservoir pour des échantillons, la portion (2) étant entourée par le premier plateau rotatif (4) et les échantillons pouvant parvenir par le biais d'une ouverture (22) sur le premier plateau rotatif (4), l'ouverture (22) étant prévue dans une délimitation (3) qui est disposée entre le premier plateau rotatif (4) et la portion intérieure (2).
